# DEMANDE DE BREVET EUROPEEN

(11) **EP 1 110 592 A2**
(43) Date de publication de la demande: **27.06.2001**
(21) Numéro de dépôt: 00450018.7
(22) Date de dépôt: 15.12.2000
(51) Int. Cl.: B01D 39/20

(54) **Procédé et dispositif de filtration par inox fritté des liquides fermentescibles, boissons fermentées et produits dérivés**

(30) Priorité: 22.12.1999 FR 9916206
(71) Demandeur: Inox Filtre Developpement S.a.r.l., 33300 Bordeaux (FR)
(72) Inventeur: Romat, Herve, 33710 Teuillac (FR)

(57) **Abrégé**

La présente invention concerne un procédé de filtration essentiellement des liquides fermentescibles, des boissons fermentées et des produits dérivés, utilisant les propriétés incomparables résultant de l'évolution d'un matériau issu du frittage de poudre d'acier inoxydable, et le dispositif de mise en oeuvre.

Il permet une filtration filament plus sélective, réalisée dans des conditions optima d'hygiène et de stabilité quant aux caractéristiques organoleptiques du produit filtré, tout en minorant et en résolvant les problèmes liés au colmatage et au décolmatage du filtre, tant sur le plan physique qu'écologique.

Selon un mode de réalisation de l'invention, le dispositif se compose d'une chambre (1) renfermant le filtre (2), munie d'une pompe d'alimentation (3) et d'un système limitateur de pression (4).

## Description

La présente invention concerne un procédé de filtration essentiellement des liquides fermentescibles, des boissons fermentées et . des produits dérivés, utilisant les propriétés incomparables résultant de l'évolution d'un matériau issu du frittage de poudre d'acier inoxydable, et le dispositif de mise en oeuvre.

Ce procédé s'applique à toutes les boissons ou liquides pouvant servir de base à des boissons fermentées : jus de fruits, mélasses, macérations permettant d'extraire des substances fermentescibles.

Il s'applique à toutes les boissons ou liquides partiellement ou totalement fennentés, purs ou en mélange, tels que les vins, les cidres et les bières; il s'applique également aux pineaux, portos, mistelles, vins de liqueur, vins doux naturels, apéritifs à base de vin, ainsi qu'à toutes les boissons et liquides assimilables présentant une composition élémentaire commune basée sur un support acide et un support alcoolique ou assimilable à l'alcool ; il s'applique aussi à toutes les boissons ou liquides dérivés des produits de base, qu'ils soient purs ou en mélange, tels que les moûts concentrés, les bourbes diverses et les dérivés des produits fermentés, les alcools, les vinaigres et tous les résidus ou effluents.

L'état de la technique a connu dans le temps, divers types de filtres, divers procédés et dispositifs de filtration des liquides alimentaires, mais aucun n'a jamais mis à profit, en ce domaine, les propriétés de l'inox fritté, qui permettent d'obtenir, dans cette application, par l'utilisation de conception simple, une filtration infiniment plus sélective, réalisée dans des conditions optima d'hygiène et de stabilité quant aux caractéristiques organoleptiques du produit filtré, tout en minorant et en résolvant les problèmes liés au colmatage et au décolmatage du filtre, tant sur le plan physique qu'écologique.

Ainsi, selon des procédés connus, la filtration est effectuée en associant des filtres en profondeur qui retiennent la plus grande partie des particules (plaques, terres de diatomées, verres frittés, cartouches) et des filtres de surface ou écrans.

La filtration est soit frontale (la suspension est placée au dessus du filtre et la filtration est effectuée par gravité ou à l'aide d'une pompe), soit tangentielle (on fait circuler le fluide parallèlement au filtre, au moyen d'une pompe ou de tout autre procédé en associant éventuellement la pression).

Il existe déjà un procédé et un dispositif utilisant le métal fritté en plaque, mais il repose sur la combinaison de plusieurs parois en métal fritté d'origines et de types divers, présentant des zones de porosité différentes (brevet 84 01727 déposé le 26/01/1984, déchu le 30/09/1991) ou sur l'utilisation d'une couche unique de métal fritté obtenue par frittage conjoint ou cofrittage d'au moins deux zones de perméabilité décroissante, et pas spécifiquement sur l'utilisation en une seule couche ou en plusieurs couches de l'inox fritté à porosité et perméabilité uniformes. De plus, selon la revendication 1, la filtration est exclusivement frontale.

Mais aucun des procédés et des dispositifs de filtration utilisés jusqu'à ce jour pour les liquides concernés ne donnent entière satisfaction.

En effet, les résultats sont imparfaits :
- les qualités organoleptiques du liquide à filtrer sont plus ou moins altérées en raison notamment d'interactions qui peuvent se produire entre le filtre et le liquide
- l'hygiène est plus ou moins respectée
- le filtre est rapidement colmaté et le décolmatage en est limité
- les dispositifs sont complexes.

La présente invention vise donc à résoudre les problèmes de clarification et de stabilité microbiologique des boissons fermentées, de leurs produits de base et produits dérivés, tout en respectant d'une part les qualités intrinsèques du produit sur le plan physique, chimique et organoleptique, et, d'autre part, les conditions hygiéniques et écologiques les plus strictes, et enfin, en minimisant les problèmes liés au décolmatage.

Cela est rendu possible par l'utilisation du frittage isostatique de poudre d'inox selon le procédé et le dispositif décrits ci-après.

Les qualités de ce matériau très résistant et très hygiénique, permettent d'optimiser de façon très significative la filtration des liquides concernés.

En effet:
- il est parfaitement neutre vis à vis des boissons et des liquides, tant au plan physique que chimique
- il n'en altère pas les qualités organoleptiques
- il est résistant vis à vis de la plupart des liquides mis en oeuvre en vue de stériliser ou de nettoyer (produits alcalins ou acides, eau chaude, vapeur, seuls ou combinés)
- il est d'une grande rigidité, permettant le passage des liquides aussi bien à co-courant qu'à contre courant, avec des pressions relativement élevées
- il est décolmatable et régénérable quasiment à l'infini, sans incidence néfaste au plan écologique.

En outre, le matériau utilisé présente une grande homogénéité, une grande régularité dans la dimension et la distribution des pores, sa perméabilité étant en conséquence sensiblement identique en tous ses points. Il est en outre possible, selon son mode de fabrication, d'obtenir des pores plus ou moins larges, plus ou moins denses, afin de répondre précisément aux contraintes de la filtration envisagée.

Ces qualités ne sont pas sans incidence, puisqu'elles permettent de mettre en équation plus précisément, d'une part les contraintes de la filtration à effectuer, et d'autre part, la porosité et la perméabilité du filtre à utiliser et la pression à appliquer.

Elles permettent également d'associer une grande capacité de rétention à une aptitude à retenir les germes et à un décolmatage aisé obtenu par la procédure la plus simple.

La présente invention présente donc un intérêt certain.

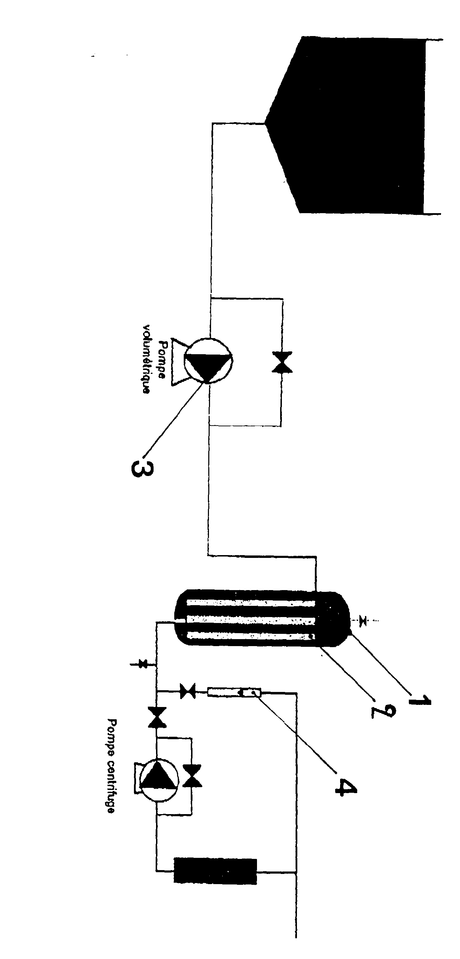

Elle est représentée à titre d'exemple non limitatif sur la figure unique ci-jointe.

Selon un mode de réalisation de l'invention et selon la figure unique, le filtre est exclusivement constitué d'inox fritté présentant une grande régularité dans la dimension et la densité des pores. Il est issu d'un mélange de poudre d'acier inoxydable porté en température sous pression isostatique.

Toujours selon un mode de réalisation de l'invention, la filtration est de préférence frontale - mais le mode tangentiel est possible- et effectuée sous pression.

La rétention s'effectue selon trois modes différents :
- en surface, par criblage, pour les particules dont la dimension est supérieure à la dimension des pores
- dans la masse du matériau, présentant des pièges de type simplement physique ou plus complexe, de type électro-chimique ; les particules s'arrêtent au point où la résistance rencontrée est égale à la force motrice.
- par la combinaison des deux modes précédents.

Diverses catégories de ce type de filtre peuvent être utilisées selon les différents liquides concernés ou, pour un même liquide, selon sa charge en particules.

Un apport séquentiel ou alluvionage de matériaux neutres divers tels que billes de verre ou cellulose, peut permettre d'augmenter la rétention.

La pression appliquée est modulée en fonction des nécessités.

Bien que ce procédé réduise le colmatage du filtre, un décolmatage, - procédure qui permet de récupérer la capacité de rétention la plus proche possible du niveau initial, doit être régulièrement effectué.

Il peut se faire selon différentes modalités :
- de préférence, par circulation à contre courant et à une pression donnée, du filtrat
- par circulation à co-courant ou à contre courant d'eau froide et/ou chaude
- si nécessaire, par l'utilisation des ultrasons
- en dernier lieu, dans les cas les plus extrêmes, par utilisation des produits chimiques traditionnels de nettoyage de l'acier inoxydable.

Toujours selon un mode de réalisation de l'invention et selon la figure unique, le dispositif de filtration se compose d'une chambre fermée (1) parfaitement isolée de l'extérieur et stérilisable, renfermant le filtre en inox fritté (2), munie d'une pompe d'alimentation (3) et d'un système limitateur de pression (4) permettant d'arrêter la pompe d'alimentation (3) et de mettre en oeuvre le décolmatage.

### FONCTIONNEMENT :

Le liquide à filtrer est injecté dans la chambre (1) par la pompe (3) et traverse le filtre (2). A une pression déterminée et par le jeu du limitateur de pression (4), la pompe d'alimentation s'arrête et le décolmatage débute; ce dernier peut être manuel, semi-automatique ou automatique, selon les différentes utilisations.

## Revendications

1. Procédé de filtration essentiellement des liquides fermentescibles, des boissons fermentées et des produits dérivés, caractérisé en ce que le filtre (2) utilisé est exclusivement constitué d'inox fritté, matériau issu du frittage de poudre spécifique d'acier inoxydable, présentant des pores quasi monodimensionnels régulièrement répartis dans la masse, donc une porosité et une perméabilité sensiblement identiques en tous ses points, pouvant être modulées en fonction du liquide à filtrer.

2. Procédé de filtration selon la revendication un, caractérisé en ce que la filtration s'effectue sous une pression contrôlée, au moyen d'un filtre (2) parfaitement homogène, permettant d'associer une grande rétention à une aptitude à retenir les germes et présentant en outre une grande capacité de décolmatage et de régénération.

3. Procédé de filtration selon la revendication un ou le revendication deux, caractérisé en ce que, pour tous types de liquides, la porosité et la perméabilité du filtre (2) d'une part, et la pression appliquée et maintenue à l'intérieur de la chambre (1), d'autre part, sont dans un rapport connu et quasi constant, en parfaite adéquation avec les caractéristiques du liquide filtré.

4. Dispositif de filtration pour la mise en oeuvre du procédé selon l'une quelconque des revendications précédentes, caractérisé en ce que, constitué d'une chambre fermée stérilisable (1), munie d'une pompe d'alimentation (3), elle comporte un filtre en inox fritté (2) et un système limitateur de pression (4) permettant le déclenchement automatique du décolmatage à une pression donnée atteinte dans la chambre (1) et l'arrêt de la pompe (3).

5. Procédé de filtration selon l'une quelconque des revendications précédentes, caractérisé en ce que la filtration effectuée à l'aide d'un filtre spécifique en inox fritté, est de préférence de type frontal, mais peut être tangentielle.
